# EUROPÄISCHE PATENTSCHRIFT

(11) **EP 1 354 692 B1**
(45) Veröffentlichungstag und Bekanntmachung des Hinweises auf die Patenterteilung: **04.07.2007**
(21) Anmeldenummer: 03004451.5
(22) Anmeldetag: 27.02.2003
(51) Int. Cl.: B29C 49/04

(54) **Extrusionsblasverfahren und -anlage**
Extrusion blow moulding method and apparatus
Procédé et appareil d'extrusion soufflage

(30) Priorität: 18.04.2002 DE 10217311
(43) Veröffentlichungstag der Anmeldung: 22.10.2003
(73) Patentinhaber: MBK Maschinenbau Koetke GmbH, 29394 Reinstorf (DE)
(72) Erfinder: Koetke, Claus-Dieter, 29394 Reinstorf (DE); Koetke, Thomas-Marten, 29394 Reinstorf (DE)
(74) Vertreter: Prietsch, Reiner

(56) Entgegenhaltungen:
- EP-A- 0 567 164
- EP-A- 0 633 120
- US-A- 2 887 716
- US-A- 3 217 071
- US-A- 5 256 346
- US-A- 5 336 464
- US-A- 5 645 873

## Beschreibung

Die Erfindung betrifft ein Extrusionsblasverfahren und eine Extrusionsblasanlage.

Das allgemein übliche Extrusionsblasverfahren umfasst folgende Schritte:
- Kontinuierliches Plastifizieren eines Kunststoffes zu einer Kunststoffschmelze mittels eines Extruders
- Direktes Fördern der Schmelze von dem Extruder unter Druck zu einem Düsenkopf zum Umformen in einen freihängenden Schlauch, der in eine unter dem Düsenkopf befindliche Blasform eintritt oder von dieser übernommen wird
- Durchtrennen des Schlauches zwischen dem Düsenkopf und der Blasform jeweils nach dem Extrudieren einer gegebenen Länge des Schlauches
- Verfahren der Blasform in eine andere Arbeitsposition.

Ein solches Verfahren ist aus der US 5, 256, 346 bekannt.

Nach dem Durchtrennen des Schlauches muss verhindert werden, dass die soeben voneinander getrennten Schlauchteile, d.h. das Ende des in die Blasform extrudierten Schlauchabschnittes und der Anfang des nächsten Schlauchabschnittes, sofort wieder miteinander verschweißen. Dafür sind verschiedene Maßnahmen bekannt. Zum Beispiel kann bei Verwendung eines Schubschneckenextruders die Verschiebung der Schnecke während des Taktes, in dem der extrudierte Schlauch durchtrennt wird, unterbrochen werden. Schub-schneckenextruder sind jedoch wesentlich teuerer als kontinuierlich arbeitende Extruder mit lediglich rotierender Schnecke, die deshalb bevorzugt eingesetzt werden. In diesem Fall wird das Verschweißen der Schlauchenden durch mit dem Durchtrennen beginnendes Absenken der häufig auch als Schließeinheit bezeichneten Blasform verhindert. Die Absenkung wird durch Führung der Blasform auf schräg abwärts geneigten Holmen oder Schienen erreicht. Alternativ kann die Blasform auch an Parallelschwingen, die um eine horizontale Achse schwenken, gelagert werden. Stattdessen kann auch umgekehrt der Düsenkopf im Moment des Durchtrennens oder Schneidens des Schlauches nach oben angehoben werden, was allerdings das Anheben des gesamten Aggregates, bestehend aus Trichterfüller, Extruder, etwaigem Zusatzextruder und Düsenkopf notwendig macht. Diese teilweise tonnenschweren sogenannten Nickextruder benötigen eine entsprechend aufwändige, proportionale hydraulische Steuerung, weil nur eine erschütterungsarme Nickbewegung gewährleistet, dass auf dem extrudierten Schlauch keine Marken entstehen.

Aus der US 5,645,873 ist ein sog. Akkustaukopf bekannt. Der Akkustaukopf hat eine Akkukammer, die über einen kontinuierlich plastifizierenden Extruder gefüllt wird. Ist in der Akkukammer die zum Ausstoßen eines schlauchförmigen Vorformlings notwendige Menge gespeichert, so wird diese mittels eines Kolbens schussweise ausgestoßen. Ein Verkleben aufeinanderfolgender Vorformlinge kann nicht erfolgen. Nachteilig ist die aufwendige Konstruktion und der damit verbundene Preis.

Auch aus der EP-A-0 633 120 ist ein Akkustaukopf zur diskontinuierlichen Extrusion bekannt. Von einem Extruder plastifizierter Kunststoff wird über eine Pumpe mit konstanter volumetrischer Füll-Förderrate der Akkukammer des Staukopfes zugeführt. Durch die konstante volumetrische Füll-Förderrate werden besonders gleichmäßige Vorformlinge extrudiert.

Der Erfindung liegt die Aufgabe zugrunde, ein Verfahren und eine Anlage zu schaffen, die mit wesentlich geringerem Aufwand und deshalb kostengünstig das erneute Verkleben oder Verschweißen der Schlauchenden nach dem Trennen des Schlauches vermeidet.

Verfahrensmäßig ist diese Aufgabe dadurch gelöst, dass dieses Fördern der Schmelze von dem Extruder zu dem Düsenkopf mit Beginn des Trennvorganges unterbrochen und frühestens mit Beginn des Verfahrens der Blasform fortgesetzt wird.

Obwohl also kontinuierlich plastifiziert und mithin ein normaler Schneckenextruder eingesetzt werden kann, wird der Austritt des Schlauches aus der Düse während des Trennvorganges kurzzeitig unterbrochen, wie es bisher nur durch Einsatz eines teueren und diskontinuierlich arbeitenden

### Schubschneckenextruders möglich war.

Bevorzugt wird zur Unterbrechung des Förderns der Schmelze letztere in einen Zwischenspeicher umgeleitet (Anspruch 2). Dieser Zwischenspeicher muß nur ein geringes Volumen der kontinuierlich von dem Extruder gelieferten Kunststoffschmelze aufnehmen, z.B. 100 bis 200 cm³, weil es genügt, das Extrudieren des Schlauches aus dem Düsenkopf so lange zu unterbrechen oder auch nur zu verlangsamen, bis ein das Verschweißen verhindernder Abstand zwischen den Schlauchenden entstanden ist. In der Regel genügt z.B. eine Unterbrechung der Extrusion für 1 bis 3 Sekunden.

Die während der kontinuierlichen Extrusion zwischengespeicherte Schmelze kann der dem Düsenkopf zugeführten Schmelze wieder zugemischt werden (Anspruch 3). Die zwischengespeicherte Schmelze ist also nicht verloren.

Anlagentechnisch ist die der Erfindung zugrundeliegende Aufgabe bei einer Extrusionsblasanlage, mit einem Extruder, der eine Kunststoffschmelze erzeugt und über einen Kanal mit einem Düsenkopf zum Extrudieren eines Schlauches verbunden ist, unter dem mindestens eine verfahrbare Blasform angeordnet ist, erfindungsgemäß dadurch gelöst, dass an den Kanal zwischem dem Extruder und dem Düsenkopf ein Akkumulator in Form eines Stauzylinders mit verschiebbarem Staukolben angeschlossen ist, der mit einem Arbeitszylinder verbunden ist (Anspruch 5). Dieser Akkumulator braucht nur das oben genannte, kleine Volumen zu haben und ist dement-sprechend leicht und preiswert. Bei vielen existierenden Blasanlagen kann der Akkumulator einschließlich des zugehörigen Arbeitszylinders mit geringem Aufwand nachgerüstet werden. Der Akkumulator bzw. dessen Stauzylinder ist so ausgelegt, dass er bei druckentlastetem Staukolben der Schmelze einen geringeren Strömungswiderstand entgegensetzt als der Düsenkopf.

Die Steuerung des Akkumulatores gestaltet sich dann besonders einfach, wenn nach einer bevorzugten Ausführungsform der Arbeitszylinder während des Extrudierens des Schlauches druckbeaufschlagt ist, um den Staukolben des Stauzylinders in einer vorgeschobenen Ausstoßstellung zu halten, bis der extrudierte Schlauch seine vorgegebene Länge erreicht hat, mit Beginn des Durchtrennens des Schlauches druckentlastet ist, so dass die Schmelze in den Stauzylinder unter Verschiebung des Staukolbens eintritt und nach dem Verfahren der Blasform wieder druckbeaufschlagt wird, um den Stauzylinder zu leeren.

Eine gleichmäßige Zumischung der zwischengespeicherten Schmelze zu der dem Düsenkopf zugeführten Schmelze kann dadurch erreicht werden, wenn dem Arbeitszylinder ein den Volumenstrom dessen Arbeitsmediums konstant haltendes Stromregelventil vorgeschaltet ist (Anspruch 6).

Das Verfahren nach der Erfindung wird anhand der eine Anlage zu dessen Durchführung in schematischer Vereinfachung darstellenden Zeichnung erläutert. Es zeigt:
- Figur 1: eine Extrusionsblasanlage zur Herstellung von Kunststoffgriffflaschen,
- Figur 2: den Akkumulator der Anlage in Fig. 1 in einer zweiten Arbeitsstellung dessen Stauzylinders.

Die Extrusionsblasanlage, von der nur die im Zusammenhang mit der Erfindung wesentlichen Teile dargestellt sind, umfasst einen angedeuteten Extruder 1, mit einer Schnecke 1a, die plastifizierten Kunststoff in Form einer hochviskosen Schmelze über einen der Klarheit halber ohne Schmelze dargestellten Kanal 2 kontinuierlich in einen Düsenkopf 3 drückt. Aus dem Düsenkopf 3 wird die Schmelze über eine Düse 4 mit Düsenkern 4a in Form eines Schlauches 5 extrudiert. Zur Veränderung der Wandstärke des Schlauches ist die Düse mit einem Verstellzylinder 6 ausgerüstet. Unter dem Düsenkopf 3 befindet sich eine geteilte Schließeinheit oder Blasform 7 (nur die hintere Formhälfte ist dargestellt) mit einem Formnest 7a entsprechend der Kontur des herzustellenden Kunststoffhohlkörpers, hier einer Griffflasche.

Sobald in das Formnest 7a ein mindestens bis zu dessen Boden reichender Schlauchabschnitt extrudiert ist, schließt die Blasform und ein von einer nicht dargestellten Vorrichtung in Richtung des Pfeiles A bewegtes Messer 8 trennt den Schlauch 5 zwischen dem Oberrand der Blasform 7 und der Mündung der Düse 4. Nach dem Durchtrennen des Schlauches fährt die Blasform auf der angedeuteten Schienen- oder Holmenführung 9 in Richtung des Pfeiles B horizontal weg und zu der nächsten, nicht dargestellten Station, meist einer Blasstation, in der der in der Blasform 7 als Vorformling befindliche Schlauchabschnitt zu dem fertigen Hohlkörper geblasen wird.

Um zu verhindern, dass das obere Ende des mittels des Messers 8 abgetrennten Schlauchabschnittes oder Vorformlings mit dem unteren Ende des aus der Düse 4 austretenden Schlauches wieder verklebt oder verschmilzt, wird während des Durchtrennens des Schlauches 5 und nötigenfalls eine kurze Zeitspanne danach, bis die Blasform 7 ausreichend weit weggefahren ist, der an sich kontinuierliche Extrusionsvorgang unterbrochen. Hierzu ist an den Kanal 2 zwischen dem Extruder 1 und dem Düsenkopf 3 über eine Bohrung 2a ein Akkumulator 15 angeschlossen. Dieser umfasst einen kleinen Stauzylinder 16 und einen einfach wirkenden Arbeitszylinder 17. Dessen Arbeitskolben 17a ist mit dem Staukolben 16a des Stauzylinders 16 verbunden. Der Arbeitsraum des Arbeitszylinders 17 ist über ein Stromregelventil 18 mit einem Arbeitsmedium, in der Regel Hydraulikflüssigkeit, beaufschlagbar. Hierzu ist das Stromregelventil 18 über eine Leitung 19 mit einer üblichen und deshalb nicht dargestellten Hydrauliksteuerung verbunden. Der dem Arbeitsraum gegenüberliegende Raum des Arbeitszylinders wird über eine Be- und Entlüftungsbohrung 17b in jeder Stellung des Kolbens 17a drucklos gehalten.

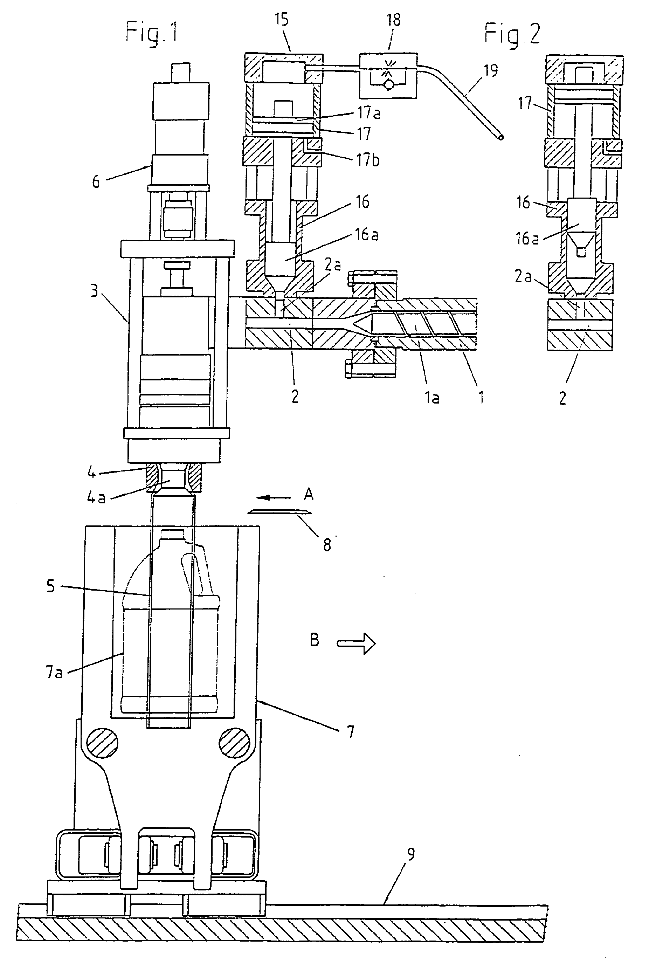

In der in Fig. 1 gezeigten Stellung ist der Arbeitsraum des Arbeitszylinders 17 druckbeaufschlagt. Der Staukolben 16a des Stauzylinders 16 befindet sich daher in seiner unteren Endstellung, in der er die Verbindungsbohrung 2a zu dem Kanal 2 verschließt. Die Schnecke 1a des Extruders 1 drückt daher die Schmelze in den Düsenkopf 3. Sobald der nicht gezeichnete Messerantrieb das Messers 8 in Richtung des Pfeiles A auf den Schlauch 5 zu bewegt um diesen zu durchtrennen, löst die nicht dargestellte Maschinensteuerung über die ebenfalls nicht dargestellte Hydrauliksteuerung die Druckentlastung des Kolbens 17a des Arbeitszylinders 17 aus und gibt den Rückflussweg für das Arbeitsmedium frei. Weil der Strömungswiderstand des Weges von dem Kanal 2 über die Bohrung 2a in den Speicherraum 4 des Stauzylinders 16 kleiner als der Strömungswiderstand des Düsenkopfes 3 ist, nimmt die Schmelze nun ihren Weg in diesen Speicherraum und drängt dabei den Staukolben 16a nach oben, z.B. bis in die in Fig. 2 gezeigte Stellung. Infolgedessen wird der Schlauch aus der Düse 4 stark verlangsamt extrudiert oder die Extrusion kommt völlig zum Stillstand. Dadurch wird der erforderliche Abstand zwischen den von dem Messer 8 durchtrennten Schlauchenden geschaffen. Nach z.B. zwei Sekunden, wenn die Blasform 7 ausreichend weit in Richtung des Pfeiles B weggefahren ist, so dass die Schlauchenden nicht mehr kollidieren können, löst die Maschinensteuerung wieder die Druckbeaufschlagung des Arbeitskolbens 17a des Arbeitszylinders 17 aus. Dementsprechend kehrt nun der Staukolben 16a seine Bewegungsrichtung um und drückt die in dem Speicher zwischengespeicherte Schmelze wieder zurück in den Kanal 2, wo sie sich mit der frischen, von dem Extruder 1 nachgedrückten Schmelze mischt. Das Stromregelventil 18 sorgt währenddessen dafür, dass dem Arbeitsraum des Arbeitszylinders 17 ein zeitlich konstanter Volumentstrom des Arbeitsmediums zugeführt wird, so dass sich der Staukolben 16a mit konstanter Geschwindigkeit in seine untere Endstellung bewegt und die zwischengespeicherte Schmelzemenge mit einen zeitlich im wesentlichen konstantem Volumenstrom der durch den Kanal 2 gedrückten Schmelzemenge wieder zugemischt wird.

Die erläuterten Bewegungen des Staukolbens 16a sind nicht zeitkritisch. Es muss lediglich sichergestellt werden, dass die gesamte, zwischengespeicherte Schmelze wieder aus dem Stauzylinder 16 ausgestoßen ist, bevor der nächste Akkumulatorzyklus mit dem Aktivieren des Messers 8 beginnt. Das Volumen der zwischengespeicherten Schmelze ist gering, deshalb genügt ein klein bauender Akkumulator mit einem Speichervolumen von in der Regel nicht mehr als ca. 100 bis 200 cm³.

## Patentansprüche

1. Extrusionsblasverfahren, mit den Schritten
- kontinuierliches Plastifizieren eines Kunststoffes zu einer Kunststoffschmelze mittels eines Extruders (1)
- direktes Fördern der Schmelze von dem Extruder unter Druck zu einem Düsenkopf (3) zum Umformen in einen freihängenden Schlauch (5), der in eine unter dem Düsenkopf befindliche Blasform (7) eintritt oder von dieser übernommen wird
- Durchtrennen des Schlauches (5) zwischen dem Düsenkopf (3) und der Blasform (7) jeweils nach dem Extrudieren einer gegebenen Länge des Schlauches
- Verfahren der Blasform (7) in eine andere Arbeitsposition
**dadurch gekennzeichnet, dass**
- dieses Fördern der Schmelze von dem Extruder (1) zu dem Düsenkopf (3) mit Beginn des Trennvorganges unterbrochen und frühestens mit Beginn des Verfahrens der Blasform (7) fortgesetzt wird.

2. Verfahren nach Anspruch 1, **dadurch gekennzeichnet, dass** zur Unterbrechung des Förderns der Schmelze letztere in einen Zwischenspeicher (15) umgeleitet wird.

3. Verfahren nach Anspruch 2, **dadurch gekennzeichnet, dass** während der kontinuierlichen Extrusion die zwischengespeicherte Schmelze der dem Düsenkopf (3) zugeführten Schmelze zugemischt wird.

4. Verfahren nach Anspruch 2 oder 3, **dadurch gekennzeichnet, dass** der Zwischenspeicher (15) während des Extrudierens des Schlauches (5) und bis der extrudierte Schlauch seine vorgegebene Länge erreicht hat, druckbeaufschlagt wird, dass der Zwischenspeicher (15) mit Beginn des Durchtrennens des Schlauches (5) druckentlastet wird, so dass die Schmelze in den Zwischenspeicher (15) eintritt und dass der Zwischenspeicher (15) durch Druckbeaufschlagen nach dem Verfahren der Blasform (7) geleert wird.

5. Extrusionsblasanlage zur Durchführung des Verfahrens nach einem der Ansprüche 1 bis 4, mit einem Extruder (1), der eine Kunststoffschmelze erzeugt und über einen Kanal (2) mit einem Düsenkopf (3) zum Extrudieren eines Schlauches (5) verbunden ist, unter dem mindestens eine verfahrbare Blasform (7) angeordnet ist, **dadurch gekennzeichnet, dass** an den Kanal (2) zwischem dem Extruder (1) und dem Düsenkopf (3) ein Akkumulator (15) in Form eines Stauzylinders (16) mit verschiebbarem Staukolben (16a) angeschlossen ist, der mit einem Arbeitszylinder (17) verbunden ist.

6. Extrusionsblasanlage nach Anspruch 5, **dadurch gekennzeichnet, dass** dem Arbeitszylinder (17) ein den Volumenstrom dessen Arbeitsmediums konstant haltendes Stromregelventil (18) vorgeschaltet ist.

## Claims

1. An extrusion blow moulding method, comprising the following steps:
- continuous plasticizing of a plastic material into a plastic melt by means of an extruder (1);
- conveyance of the melt under pressure to a nozzle head (3) for forming into a freely suspended hose (5) which enters into a blow mould (7) situated beneath the nozzle head or is received by the same;
- severing of the hose (5) between the nozzle head (3) and the blow mould (7), each after the extrusion of a given length of hose;
- displacement of the blow mould (7) to a different working position;
**characterized in that**
- the conveyance of the melt from the extruder (1) to the nozzle head (3) is interrupted upon commencement of the severing process and is continued at the earliest with the start of the displacement of the blow mould (7).

2. A method according to claim 1, **characterized in that** for interrupting the conveyance of the melt the latter is redirected to an intermediate reservoir (15).

3. A method according to claim 2, **characterized in that** during the continuous extrusion the intermediately stored melt is admixed to the melt supplied to the nozzle head (3).

4. A method according to claim 2 or 3, **characterized in that** the intermediate reservoir (15) is subjected to pressure during the extrusion of the hose (5) and until the extruded hose has reached its predetermined length, that the intermediate reservoir (15) is pressure-relieved with the start of the severing of the hose (5), so that the melt enters the intermediate reservoir (15) and that the intermediate reservoir (15) is discharged by pressurization after the displacement of the blow mould (7).

5. An extrusion blow moulding system for performing the method according to one of the claims 1 to 4, comprising an extruder (1) which produces a plastic melt and is connected via a duct (2) with the nozzle head (3) for extruding a hose (5), beneath which is arranged at least one displaceable blow mould (7), **characterized in that** an accumulator (15) in form of a restrictor cylinder (16) with a displaceable restrictor piston (16a) is connected to the duct (2) between the extruder (1) and the nozzle head (3), which accumulator is connected with a working cylinder (17).

6. An extrusion blow moulding system according to claim 5, **characterized in that** a flow regulating valve (18) is provided upstream of the working cylinder (17), which valve keeps constant the volume flow of its working medium.

## Revendications

1. Procédé d'extrusion soufflage comportant les étapes suivantes :
- ramollissement continu d'une matière plastique en une masse de matière plastique fondue au moyen d'une extrudeuse (1),
- acheminement direct sous pression de la masse fondue depuis l'extrudeuse vers une tête d'extrusion (3) en vue de sa transformation en un tube (5) qui pend librement et entre dans ou est reçu par un moule de soufflage (7) situé sous la tête d'extrusion,
- sectionnement du tube (5) entre la tête d'extrusion (3) et le moule de soufflage (7) après extrusion d'une longueur de tube donnée,
- déplacement du moule de soufflage (7) vers une autre position de travail,
**caractérisé en ce que**
- cet acheminement de la masse fondue de l'extrudeuse (1) à la tête d'extrusion (3) est interrompu au début de l'opération de sectionnement et ne reprend pas avant le début du déplacement du moule de soufflage (7).

2. Procédé selon la revendication 1, **caractérisé en ce que** pour interrompre l'acheminement de la masse fondue, cette dernière est déviée vers une chambre de stockage tampon (15).

3. Procédé selon la revendication 2, **caractérisé en ce que**, pendant l'extrusion continue, la masse fondue temporairement stockée est ajoutée à la masse fondue alimentant la tête d'extrusion (3).

4. Procédé selon la revendication 2 ou la revendication 3, **caractérisé en ce que** la chambre de stockage tampon (15) est mise sous pression pendant la formation par extrusion du tube (5) et jusqu'à ce que le tube extrudé ait atteint la longueur prédéfinie, **en ce que** la pression dans la chambre de stockage tampon (15) est relâchée au début du sectionnement du tube (5) de manière à ce que la matière fondue entre dans la chambre de stockage tampon (15) et **en ce que** la chambre de stockage tampon (15) se vide lorsqu'elle est mise sous pression après le déplacement du moule de soufflage (7).

5. Appareil d'extrusion soufflage pour la mise en oeuvre du procédé selon l'une quelconque des revendications 1 à 4, comportant une extrudeuse (1) qui produit une masse de matière plastique fondue et est reliée par un canal (2) à une tête d'extrusion (3) destinée à former par extrusion un tube (5) et sous laquelle est disposé au moins un moule de soufflage (7) déplaçable, **caractérisé en ce qu'**un accumulateur (15), sous la forme d'un cylindre de stockage (16) avec piston mobile (16a), est raccordé au canal (2) reliant l'extrudeuse (1) à la tête d'extrusion (3), lequel piston mobile est relié à un vérin (17).

6. Appareil d'extrusion soufflage selon la revendication 5, **caractérisé en ce qu'**une soupape de régulation du débit (18) est raccordée en amont du vérin (17) afin de maintenir à un niveau constant le débit volumétrique de son fluide moteur.
